(19) Europäisches Patentamt
European Patent Office
Office européen des brevets

(11) **EP 4 716 079 A1**

(12) **EUROPEAN PATENT APPLICATION**

(43) Date of publication:
**25.03.2026 Bulletin 2026/13**

(21) Application number: **24201708.5**

(22) Date of filing: **20.09.2024**

(51) International Patent Classification (IPC):
$H02M\ 1/00^{(2006.01)}$    $H02M\ 1/12^{(2006.01)}$
$H02M\ 1/42^{(2007.01)}$    $H02M\ 3/156^{(2006.01)}$
$H02M\ 7/538^{(2007.01)}$

(52) Cooperative Patent Classification (CPC):
**H02M 1/007; H02M 1/0077; H02M 1/123;**
**H02M 1/4233; H02M 3/156;** H02M 1/0074;
H02M 1/126; H02M 7/4837; H02M 7/538

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Infineon Technologies Austria AG**
**9500 Villach (AT)**

(72) Inventors:
• **PACINI, Alex**
**9500 Villach (AT)**
• **KASPER, Matthias Joachim**
**9500 Villach (AT)**
• **PEVERE, Alessandro**
**9500 Villach (AT)**

(74) Representative: **Westphal, Mussgnug & Partner,**
**Patentanwälte mbB**
**Werinherstraße 79**
**81541 München (DE)**

(54) **METHOD FOR OPERATING A POWER CONVERTER AND POWER CONVERTER**

(57) A method for operating a power converter and a power converter are disclosed. The method includes adjusting a common mode voltage (Vcm) at first and second output nodes (p, n) of a power converter. The power converter includes: a first input node (a) configured to receive a first input voltage (Va), and a second input node (b) configured to receive a second input voltage (Vb); a first intermediate capacitor (21) connected between a first intermediate node (x) and a midpoint (m), and a second intermediate capacitor (22) connected between the midpoint (m) and a second intermediate node (y); a first output capacitor (41) connected between a first output node (p) and the midpoint (m), and a second output capacitor (42) connected between the midpoint (m) and a second output node (q); an input converter (1) coupled to the first input node (a) and configured to provide an intermediate voltage (Vdc) between the first intermediate node (x) and the second intermediate node (y); a first output converter (31) coupled between the first intermediate capacitor (21) and the first output capacitor (41), and a second output converter (32) coupled between the second intermediate capacitor (22) and the second output capacitor (42); and a balancing circuit (5) coupled to the first intermediate capacitor (21) and the second intermediate capacitor (22), wherein the second input node (b) is coupled to the midpoint (m). Adjusting the common mode voltage includes: obtaining a duty cycle (D31, D32) of operation of at least one of the first and second output converters (31, 32); and adjusting a duty cycle (D5) of operation of the balancing circuit (5) dependent on the obtained duty cycle (D31, D32; D3) of the at least one of the first and second output converters (31, 32).

FIG 1

EP 4 716 079 A1

**Description**

This disclosure relates in general to a method for operating a power converter, in particular, a non-isolated power converter configured to be coupled to a split-phase power supply system and provide a regulated direct (DC) output voltage.

A split-phase power supply system, as used in North America, for example, provides two supply voltages that are referenced to ground, have essentially the same amplitude, and have a phase shift of about 180°. A power converter configured to provide a regulated direct voltage or direct current based on power received from a split-phase power supply system may include a first converter stage with a PFC (power factor correction) functionality that is configured to generate a first direct voltage based on the input voltages received from the power supply system and a second converter stage that is configured to generate a regulated second direct voltage based on the first direct voltage. Due to the nature of a split-phase power supply system, the first direct voltage provided by the PFC converter may suffer from an oscillating common mode voltage that is in correspondence with one of the two supply voltages. In order to prevent the second direct voltage from having a corresponding oscillating common mode voltage the power converter usually includes a transformer that galvanically isolates the second converter stage from the first converter stage.

A transformer, however, is bulky and cost-intensive. It is therefore desirable to provide a method for operating a non-isolated power converter that is configured to be coupled to a split-phase power supply system such that an output voltage of the power converter has a low common mode voltage.

One example relates to a method. The method includes adjusting a common mode voltage at first and second output nodes of a power converter. The power converter includes a first input node configured to receive a first input voltage, a second input node configured to receive a second input voltage, a first intermediate capacitor connected between a first intermediate node and a midpoint, a second intermediate capacitor connected between the midpoint and a second intermediate node, a first output capacitor connected between a first output node and the midpoint, a second output capacitor connected between the midpoint and a second output node, an input converter coupled to the first input node and configured to provide an intermediate voltage between the first intermediate node and the second intermediate node, a first output converter coupled between the first intermediate capacitor and the first output capacitor, a second output converter coupled between the second intermediate capacitor and the second output capacitor, and a balancing circuit coupled to the first intermediate capacitor and the second intermediate capacitor. The second input node is coupled to the midpoint. Adjusting the common mode voltage includes obtaining a duty cycle of operation of at least one of the first and second output converters, and adjusting a duty cycle of operation of the balancing circuit dependent on the obtained duty cycle of the at least one of the first and second output converters.

Another example relates to a power converter. The power converter, includes a first input node configured to receive a first input voltage, a second input node configured to receive a second input voltage, a first intermediate capacitor connected between a first intermediate node and a midpoint, a second intermediate capacitor connected between the midpoint and a second intermediate node, a first output capacitor connected between a first output node and the midpoint, a second output capacitor connected between the midpoint and a second output node, an input converter coupled to the first input node and configured to provide an intermediate voltage between the first intermediate node and the second intermediate node, a first output converter coupled between the first intermediate capacitor and the first output capacitor, a second output converter coupled between the second intermediate capacitor and the second output capacitor, a balancing circuit coupled to the first intermediate capacitor and the second intermediate capacitor, and a control circuit. The control circuit is configured to obtain a duty cycle of operation of at least one of the first and second output converters, adjust a duty cycle of operation of the balancing circuit dependent on the obtained duty cycle of the at least one of the first and second output converters, and operate the balancing circuit in accordance with the adjusted duty cycle.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of a power converter that includes an input converter, first and second intermediate capacitors, first and second output converters, first and second output capacitors, and a balancing circuit connected to the first and second intermediate capacitors;

Figure 2 illustrates signal diagrams of a first input voltage and a second input voltage that may be received by the power converter;

Figure 3 illustrates one example of a method for operating the balancing circuit;

Figure 4 illustrates one example of the balancing circuit;

Figure 5 shows signal diagrams that illustrate one possible way of operating the balancing circuit according to Figure 4;

Figure 6 illustrates another example of the balancing circuit;

Figure 7 shows signal diagrams that illustrate operation of a power converter of the type illustrated in Figure 1 according to one example;

Figure 8 schematically illustrates examples of the first output converter and the second output converter;

Figure 9 illustrates one example of the input converter; and

Figure 10 illustrates one example of an optional input filter.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

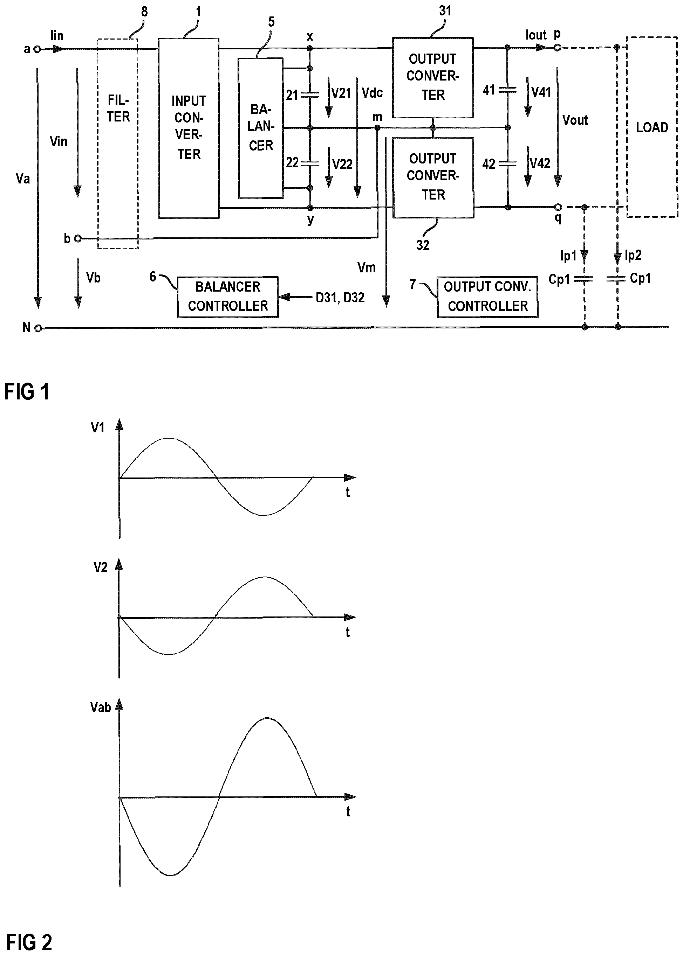

Figure 1 schematically illustrates a power converter according to one example. The power converter includes a first input node a configured to receive a first input voltage Va and a second input node b configured to receive a second input voltage Vb. The power converter further includes a first intermediate capacitor 21 connected between a first intermediate node x and a midpoint m, a second intermediate capacitor 22 connected between the midpoint m and a second intermediate node y, a first output capacitor 41 connected between a first output node p and the midpoint m, and a second output capacitor 42 connected between the midpoint m and a second output node q. The first intermediate node x may also be referred to as first DC link node, and the second intermediate node y may also be referred to as second DC link node.

Furthermore, the power converter includes an input converter 1 coupled to the first input node a and configured to provide an intermediate voltage Vdc between the first intermediate node x and the second intermediate node y. The intermediate voltage Vdc may also be referred to as a DC link voltage. Furthermore, the power converter includes a first output converter 31 coupled between the first intermediate capacitor 21 and the first output capacitor 41 and a second output converter 32 coupled between the second intermediate capacitor toy and the second output capacitor 42. Furthermore, a balancing circuit 5 is coupled to the first intermediate capacitor 21 and the second intermediate capacitor 22.

According to one example, the power converter further includes a first controller 6 configured to control operation of the balancing circuit 5, and a second controller 7 configured to control operation of the first and second output converters 31, 32. The first controller 6 is also referred to as balancer controller in the following. The second controller 7 is also referred to as output converter controller or, briefly, converter controller in the following.

Referring to Figure 1, the second input node b is coupled to the midpoint m. According to one example, this includes that the second input node b is directly connected to the midpoint m. According to another example illustrated in dashed lines in Figure 1, the second input node b is connected to the midpoint m via an optional input filter 8.

According to one example, "the input converter 1 being coupled to the first input node a" includes that the input converter 1 is directly connected to the first input node a. According to another example illustrated in dashed lines in Figure 1, this includes that the input converter 1 is connected to the first input node a via the optional input filter 8.

According to one example, the input converter 1 is a switched-mode converter that is configured to control, by a switched-mode operation of electronic switches included in the input converter 1, (a) generation of the intermediate voltage Vdc; and (b) a current waveform of an input current Iin received at the first input node a. The switched-mode operation of the input converter 1 may cause high frequent current ripples of the input current Iin. The input filter 8 is configured to filter out or at least reduce such high frequent current ripples resulting from the switched-mode operation of the input converter 1. The input filter 8, however, does not significantly affect the electrical potential received by the input converter 1 from the first input a, and does not significantly affect the electrical potential received at the midpoint m from the second input node b. Thus, the electrical potential received by the input converter 1 from the first input node a essentially equals the electrical potential at the first input node a, and the electrical potential at the midpoint m essentially equals the electrical potential at the second input node b.

Referring to Figure 1, each of the first input voltage Va and the second input voltage Vb is referenced to a common reference node N. The common reference node N is a ground node, for example.

According to one example illustrated in Figure 2, each of the first and second input voltages Va, Vb is a sinusoidal voltage. According to one example, the first and second input voltages Va, Vb at least approximately have the same frequency and the same amplitude. A phase shift between the first and second input voltages Va, Vb is at least approximately 180°, for example. In this example, the resulting input voltage Vin received between the first and second input nodes a, b has the same frequency as the first and second input voltages Va, Vb and an amplitude that is equal to twice the amplitude of each of the first and second input voltages Va, Vb. The frequency of each of the first and second input voltages Va, Vb is in a range of between 50 Hz and 60 Hz, for example. The RMS value (root mean square) of each of the first and second input voltages Va, Vb is in a range of between 115 $V_{RMS}$ and 120 $V_{RMS}$, for example. First and second input voltages Va, Vb of the type illustrated in Figure 2 can be provided by a split-phase power supply system for example. A split-phase power supply system is common in North America, for example.

Referring to Figure 1, during operation of the power converter, a load can be connected to the output with the first and second output nodes p, q. A voltage Vout between the output nodes p, q is referred to as output voltage in the following. A current Iout provided at the output p, q is referred to as output current in the following.

According to one example, the power converter is configured to regulate the output voltage Vout. In this example, the output current Iout varies dependent on an instantaneous power consumption of the load.

According to another example, the power converter is configured to regulate the output current Iout. In this example, the output voltage Vout is defined by the load. This is the case, for example, when the load is a battery and the power converter is part of a battery charger, such as an onboard charger in a vehicle.

Referring to the above, the second input node b is coupled to the midpoint m. If, as shown in Figure 2, the second input voltage Vb is a sinusoidal voltage, the electrical potential (relative to the reference node N) at the midpoint m changes (varies) in accordance with the second input voltage Vb. Thus, a midpoint voltage Vm, which is a voltage between the midpoint m and the reference node N, varies in accordance with the second input voltage Vb.

If no additional measures were taken, voltages V21, V22 across the two intermediate capacitors 21, 22, which are referred to as first and second intermediate voltages V21, V22 in the following, would stabilize at around 50% of the DC link voltage Vdc generated by the input converter 1 between the first and second intermediate nodes x, y. Furthermore, assume that the first output converter 31 is a non-isolated converter that does not provide for a galvanic isolation between the first intermediate capacitor 21 and the first output capacitor 41 and is operated in such a way that it generates a voltage V41 across the first output capacitor 41 to be essentially proportional to the voltage V21 across the first intermediate capacitor 21 and the second output converter 32 is a non-isolated converter that does not provide for a galvanic isolation between the second intermediate capacitor 22 and the second output capacitor and is operated in such a way that it generates a voltage V42 across the second output capacitor 42 to be essentially proportional to the voltage V22 across the second intermediate capacitor 22. In this case, the electrical potentials at the output nodes p, q vary in common mode relative to ground in accordance with the second input voltage Vb. That is, a voltage Vp between the first output node p and the reference node N is essentially equal to the second input voltage Vb plus the (essentially constant) voltage V41 across the first output capacitor 41, and a voltage Vq between the second output node q and the reference node N is be essentially equal to the second input voltage Vb minus the (essentially constant) voltage V42 across the second output capacitor 42.

If, as illustrated, the load is capacitively coupled to the reference node N via parasitic capacitors Cp1, Cp2, common mode variations of the voltages Vp, Vq between the output nodes p, q and the reference node N may result in relatively high parasitic currents Ip1, Ip2 between the output nodes p, q and the reference node N. In many applications, such parasitic capacitors Cp1, Cp2 are unavoidable. High parasitic currents Ip1, Ip2 between the output nodes p, q and the reference node N, however, are undesirable and, depending on the application, can lead to the triggering of a residual current device (RCD) in the load.

In a conventional power converter, first and second output converters may therefore be implemented as isolated converters that provide for a galvanic isolation between the intermediate nodes and the output nodes. Such galvanic isolation usually includes the use of a transformer. A transformer, however, is bulky and expensive.

It is therefore desirable, in a power converter of the type illustrated in Figure 1, to implement the first and second output power converters 31, 32 as non-isolated converters and, nevertheless, avoid or at least reduce a common voltage Vcm at the output nodes p, q, so that the common mode voltage is essentially zero,

$$Vcm \approx 0 \qquad\qquad\qquad\qquad (1).$$

The common mode voltage is given by,

$$Vcm = \frac{Vp+Vq}{2} \qquad\qquad\qquad\qquad (2),$$

where Vp denotes the voltage between the first output node p and the reference node N, and Vq denotes the voltage between the second output node q and the reference node N.

For adjusting the common mode voltage Vcm, the power converter includes the balancing circuit 5 connected to the first and second intermediate capacitors 21, 22. The balancing circuit 5 is configured to vary the first and second intermediate voltages V21, V22 such that, in consideration of the varying electrical potential at the midpoint m, the common mode voltage Vcm at the output node Vcm is essentially zero. For this, the balancing circuit 5 is configured to transfer charge between the first and second intermediate capacitors 21, 22. This is explained in the following.

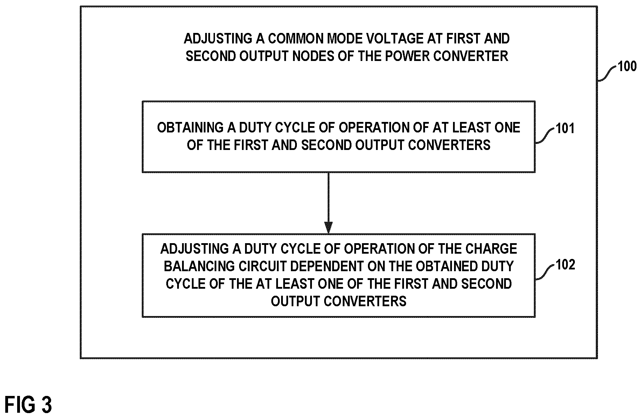

One example of a method for operating the balancing circuit 5 such that the common mode voltage Vcm is adjusted to be essentially zero is illustrated in Figure 3 and is explained in detail herein further below. Referring to Figure 3, the method includes (101) obtaining a duty cycle of operation of at least one of the first and second output converters 41, 42; and (102) adjusting a duty cycle of operation of the balancing circuit 5 dependent on the obtained duty cycle of the at least one of the first and second output converters 41, 42.

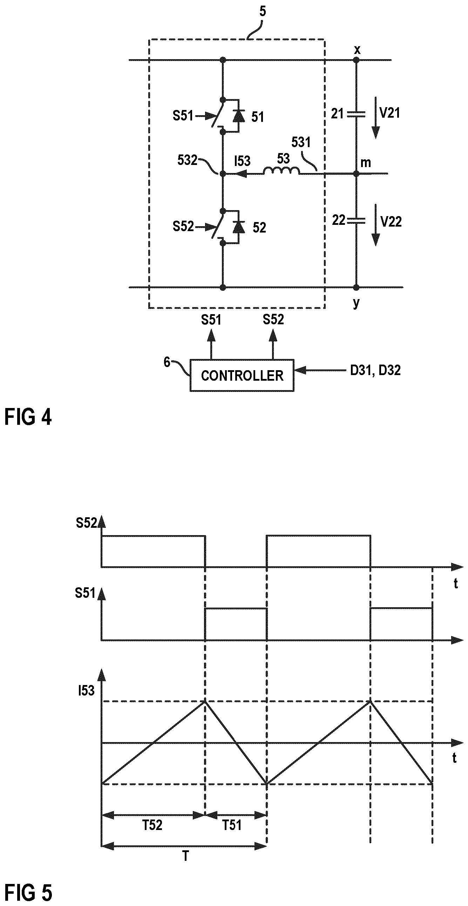

Figure 4 illustrates one example of the balancing circuit 5. In this example, the balancing circuit 5 includes an inductor 53 that includes a first circuit node 531 connected to the midpoint m and a second circuit node 531 facing away from the midpoint m. A first electronic switch 51 is connected between the second circuit node 532 of the inductor 53 and the first intermediate node x, and a second electronic switch 52 is connected between the second circuit node 532 of the inductor 53 and the second intermediate node y. The first electronic switch 51 is controlled by a first drive signal S51 and the second electronic switch 52 is controlled by a second drive signal S52. That is, the first electronic switch 51 switches on or off dependent on the first drive signal S51 and the second electronic switch 52 switches on or off dependent on the second drive signal S52. According to one example, each of the first and second drive signals S51, S52 is a PWM signal and is generated by the balancer controller 7. In the balancing circuit 5 according to Figure 5, the first electronic switch 51 may also be referred to as high-side switch and the second electronic switch 52 may also be referred to as low-side switch.

Figure 5 shows signal diagrams that illustrate one example of a method for operating the balancing circuit. More specifically, Figure 5 shows diagrams of the first and second drive signals S51, S52 and a current I53 through the inductor 53 over several drive cycles. The controller 7 switches on and off the first and second electronic switches 51, 52 alternatingly in such a way that in each drive cycle the first electronic switch 51 is in an on-state (switched-on state) for a first time duration T51 and the second electronic switch 52 is in the on-state (switched-on state) for a second time duration T52. According to one example, the controller 7 operates the balancing circuit 5 at a predefined switching frequency. The duration T of each drive cycle (or drive period) equals a reciprocal of the switching frequency.

According to one example, the switching frequency of the balancing circuit is selected from a range of between 10 kilohertz (kHz) and several megahertz (MHz), in particular between 10 kHz and 500 kHz.

A duty cycle D51 of operation of the first electronic switch 51 is given by the quotient between the first time duration T51 and the overall duration T of one drive period, and a duty cycle D52 of operation of the first electronic switch 52 is given by the quotient between the second time duration T52 and the overall duration T of one drive cycle,

$$D51 = \frac{T51}{T} \tag{3a}$$

$$D52 = \frac{T52}{T} \tag{3b}$$

where

$$D51 = 1 - D52 \tag{4},$$

and where each of the duty cycles D51, D52 ranges between 0 and 1.

Referring to the above, the first and second switches 51, 52 are operated in the on-state alternatingly. In order to avoid that both switches 51, 52 are in the on-state at the same time, there may be a short dead time (not illustrated in Figure 5) between the end of the on-state of one of the first and second switches 51, 52 and the beginning of the on-state of the other one of the first and second switches 51, 52. According to one example illustrated in Figure 4, each of the first and second switches 51, 52 includes a freewheeling element, such as a diode, which is configured to take over the inductor current I53 during the dead time before the respective switch 51, 52 switches on. Thus, after the end of the on-time of the second electronic switch 52 and before the beginning of the on-time of the first electronic switch 51, the freewheeling element of the first electronic switch 51 takes over the inductor current. Equivalently, after the end of the on-time of the first electronic switch 51 and before the beginning of the on-time of the second electronic switch 52, the freewheeling element of the second electronic switch 52 takes over the inductor current I53.

Each of the first and second electronic switches 51, 52 can be implemented as a MOSFET. In a MOSFET, an internal body diode forms the freewheeling element. Implementing the switches 51, 52 as MOSFETs, however, is only an example. Any other type of electronic switch that includes an internal or external freewheeling element may be used as well.

When the first and second switches 51, 52 are operated in the on-state alternatingly, the current I53 through the inductor 53 alternatingly flows in a first current direction and a second current direction opposite the first current direction.

Just for the purpose of illustration, the current direction indicated by the arrow in Figure 4 is referred to as first current direction. Furthermore, the inductor current I53 having the first current direction is referred to as positive inductor current and the inductor current I53 having the second current direction is referred to as negative inductor current I53 in the following. A current flow through the inductor 53 is associated with a magnetization or a demagnetization of the inductor 53 and a discharging or charging of the first and second intermediate capacitors 21, 22. This is explained in the following with reference to the signal diagrams illustrated in Figure 5.

For the purpose of illustration it is assumed that before the beginning of the first drive period illustrated in Figure 5 the first electronic switch 51 has been switched on, so that the inductor 53 has been magnetized and the inductor current I53 flows in the second current direction. When the second switch 52 switches on, the inductor current I53 continues to flow in the second current direction, so that the second intermediate capacitor 22 is charged, the magnitude of the inductor current I53 decreases, and the inductor 53 is demagnetized. When, during the on-state of the second switch 52, the inductor 53 has been entirely demagnetized, the current direction of the inductor current I53 changes from the second direction to the first direction, the magnitude of the inductor current I53 increases, and the second intermediate capacitor 22 is discharged. At the end of the on-state of the second electronic switch 52 the inductor current I53 flows in the first direction and the inductor 53 has been magnetized. When the first switch 51 switches on, the inductor current I53 continues to flow in the first direction, so that the first intermediate capacitor 21 is charged, the magnitude of the inductor current I53 decreases, and the inductor 53 is demagnetized. When, during the on-state of the first switch 51, the inductor 53 has been entirely demagnetized, the current direction of the inductor current I53 changes from the first direction to the second direction, the magnitude of the inductor current decreases, and the first intermediate capacitor 21 is discharged.

A slope of the inductor current I53 during the on-time of the second electronic switch 52 is proportional to the second intermediate voltage V22, and a slope of the inductor current I53 during the on-time of the first electronic switch 51 is proportional to the first intermediate voltage V21. In the following, the duty cycle D51 of operation of the electronic switch 52 is referred to as duty cycle D5 of operation of the balancing circuit 5.

When the balancing circuit 5 operates at a predefined duty cycle D5, the first and second intermediate voltages V21, V22 stabilize such that an overall increase of the inductor current I53 during the on-time T52 of the second electronic switch 52 equals an overall decrease of the inductor current I53 during the on-time T51 of the first electronic switch 51, so that the average inductor current I53 is zero. In this case,

$$D51 \cdot V21 = (1 - D51) \cdot V22 \tag{5},$$

which is equivalent to

$$D51 \cdot V21 - (1 - D51) \cdot V22 = 0 \tag{6}.$$

Taking into consideration that the intermediate voltage Vdc is regulated by the input converter 1 to have a predefined voltage level, that the intermediate voltage Vdc equals the first intermediate voltage V21 plus the second intermediate voltage V22,

$$Vdc = V21 + V22 \tag{7},$$

and taking into consideration equations (5) and (6) it can be seen that the first and second intermediate voltages V21, V22 stabilize as follows when operating the balancing circuit 5 at a predefined duty cycle D5,

$$V21 = (1 - D5) \cdot Vdc \tag{8a}$$

$$V22 = D5 \cdot Vdc \tag{8b}.$$

Thus, the higher the duty cycle D5 the higher the second intermediate voltage V22. Furthermore, the intermediate voltages V21, V22 are essentially equal when the duty cycle D5 equals 0.5. Based on equation (8b), the duty cycle D5 of the balancing circuit 5 can be expressed as

$$D5 = \frac{V22}{Vdc} = \frac{Vm - Vy}{Vx - Vy} \tag{9},$$

where Vm denotes the midpoint voltage, which is the voltage between the midpoint m and the reference node N, Vx denotes the voltage between the first intermediate node x and the reference node N, and Vy denotes the voltage between the second intermediate node x and the reference node N.

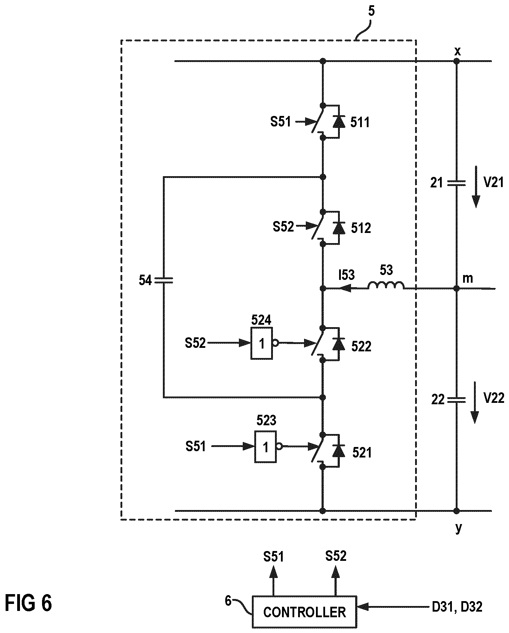

Implementing the balancing circuit 5 in accordance with the example illustrated in Figure 5 is only an example. Another example of the balancing circuit 5 is illustrated in Figure 6.

In the example illustrated in Figure 6, the balancing circuit 5 includes four electronic switches 511, 512, 521, 522. These electronic switches include a first high-side switch 511 and a second high-side switch 512 that are connected in series between the first intermediate node x and the midpoint m, and a first low-side switch 521 and a second low-side switch 522 connected in series between the second intermediate node y and the midpoint m. A capacitor 54 is connected between a first circuit node at which the first and second high-side switches 511, 512 are connected and a second circuit node at which the first and second low-side switches 521, 522 are connected.

Referring to Figure 6, each of the first high-side switch 512 and the first low-side switch 522 is connected to the inductor 53. Furthermore, the first high-side switch 511 is connected between the first intermediate node x and the second high-side switch 512, and the first low-side switch 521 is connected between the second intermediate node y and the second low-side switch 522.

The first high-side switch 511 is controlled by the first control signal S51 explained herein before and provided by the controller 6. The second high-side switch 512 is controlled by the second control signal S52 explained herein before and provided by the controller 6. The first high-side switch 511 and the second high-side switch 512 521 are switched on and off alternatingly in the same way as the first and second switches 51, 52 explained with reference to Figure 5. According to one example, the duty cycle of operation of the first high-side switch 511 defines the duty cycle D5 of operation of the balancing circuit 5.

The first low-side switch 521 is operated complementarily to the first high-side switch 511, and the second low-side switch 522 is operated complementarily to the second high-side switch 512. Thus, the first low-side switch 521 is controlled by the inverted (negated) first control signal S51, which may be generated by a first inverter 523, and the second low-side switch 522 is controlled by the inverted (negated) second control signal S52, which may be generated by a second inverter 524.

Referring to the above, in order to avoid (or at least reduce) the parasitic currents Ip1, Ip2, it is desirable to adjust the common mode Vcm voltage according to equation (2) to be at least approximately zero,

$$Vcm = \frac{Vp + Vq}{2} \overset{!}{\Leftrightarrow} 0 \tag{10a},$$

which is equivalent to the voltage Vp between the first output node p and the ground node N being at least approximately equal to the negated voltage Vq between the second output node q and the ground node N,

$$Vp \overset{!}{\Leftrightarrow} -Vq \tag{10b}.$$

In the power converter explained before, this can be achieved by suitable operating the charge balancer 5 and, more specifically, by adjusting the duty cycle D5 of the charge balancer 5 based on duty cycles D31, D32 of the output converters 31, 32, where D31 denotes a duty cycle of operation of the first output converter 31 and D32 denotes a duty cycle of operation of the second output converter 32. One example for adjusting the duty cycle D5 of the charge balancer 5 based on duty cycles D31, D32 of the output converters 31, 32 is explained in the following. The duty cycles D31, D32 of the output converters 31, 32 are also referred to as first and second output converter duty cycles in the following.

In the following, the voltage V41 across the first output capacitor 41 is referred to as first partial output voltage and the voltage V42 across the second output capacitor 42 is referred to as second partial output voltage. The output voltage Vout is given by the first partial output voltage V41 plus the second partial output voltage V42,

$$Vout = V41 + V42 \tag{11}.$$

According to one example, the first and second output converters 31, 32 are configured to generate the first and second partial output voltages V41, V42 based on the first and second intermediate voltages V21, V22 such that (a) the first partial output voltage V41 is at least approximately proportional to the first intermediate voltage V21 with a proportionality factor being given by the first output converter duty cycle D31, and (b) the second partial output voltage V42 is at least approximately proportional to the second intermediate voltage V22 with a proportionality factor being given by the second output converter duty cycle D32. That is,

$$V41 = D31 \cdot V21 = D31 \cdot (Vx - Vm) = Vp - Vm \tag{12a}$$

$$V42 = D32 \cdot V22 = D32 \cdot (Vm - Vy) = Vm - Vq \qquad (12b),$$

where D31, D32 denote the first and second output converter duty cycles, Vp denotes the voltage between the first output node p and the reference node N, and Vq denotes the voltage between the second output node q and the reference node. In this example, the first and second output converters 41, 42 are implemented as buck converters.

Based on equations (12a) and (12b) it can be shown that the voltages Vp, Vq between each of the first and second output nodes p, q and the reference node N is given by

$$Vp = D31 \cdot (Vx - Vm) + Vm \qquad (13a)$$

$$Vq = D32 \cdot (Vy - Vm) + Vm \qquad (13b),$$

so that considering equation (10b), in order to adjust the common mode voltage Vcm to be zero,

$$D31 \cdot (Vx - Vm) + Vm = -[D32 \cdot (Vy - Vm) + Vm] \qquad (14).$$

Based on equation (14), the first intermediate voltage Vx can be expressed dependent on the midpoint voltage Vm, the voltage Vy between the second intermediate node y and the reference node N, and the first and second output converter duty cycles D31, D32 as follows,

$$Vx = -Vy \cdot \frac{D32}{D31} + Vm \cdot \left(1 + \frac{D32}{D31} - \frac{2}{D31}\right) \qquad (15).$$

Considering equations (9) and (15), the duty cycle D5 for operating the charge balancer 5 in order to achieve a zero common mode voltage (Vcm=0) is given by,

$$D5 = \frac{V22}{V22 \cdot \left(1 + \frac{D32}{D31}\right) - 2 \cdot \frac{Vm}{D31}} \qquad (16).$$

Thus, based on equation (16) it can be seen that the duty cycle D5 of the charge balancer can be adjusted based on the first and second output converter duty cycles D31, D32, one of the intermediate voltages V21, V22, and the midpoint voltage Vm in order to achieve zero common mode voltage. The one of the first and second intermediate voltages V21, V22 is the second intermediate voltage V22 in the example according to equation (16).

According to one example, the first and second output converters 31, 32 are operated with the same duty cycle, D31=D32=D3. In this example, equation (16) simplifies to

$$D5 = \frac{1}{2} \cdot \frac{V22}{V22 - \frac{Vm}{D3}} \qquad (17),$$

where D3 denotes the common duty cycle of the first and second output converters 31, 32.

Referring to the above, the balancing circuit 5 is controlled by the controller 6. For this, the controller 6 is configured to calculate the duty cycle 5 of the balancing circuit in accordance with one of the equations (16) or (17) and generate the first and second control signals S51, S52 in accordance with the calculated duty cycle D5.

In the example explained herein above, the first and second output converters are 31, 32 are buck converters, so that the first and second partial output voltages V41, V42 are dependent on the first and second intermediate voltages V21, V22 and the first and second output converter duty cycles D31, D32 as given by equations (12a) and (12b). However, implementing the first and second output converter 31, 32 as buck converters is only an example. According to another example, each of the first and second output converters 31, 32 is a boost converter. In this example, the first and second partial output voltages V41, V42 are dependent on the first and second output converter duty cycles D31, D32 and the first and second intermediate voltages V21, V22 as follows,

$$V41 = \frac{1}{1-D31} \cdot V21 = \frac{1}{1-D31} \cdot (Vx - Vm) = Vp - Vm \qquad (18a)$$

$$V42 = \frac{1}{1-D32} \cdot V22 = \frac{1}{1-D32} \cdot (Vm - Vy) = Vm - Vq \qquad (18b).$$

In the same way as the charge balancer duty cycle D5 according to equations (16) and (17) is obtained based on equations (12a) and (12b) when the output converters 31, 32 are buck converters, the charge balancer duty cycle D5 can be obtained based on equations (18a) and (18b) when the output converters 31, 32 are boost converters. In each case, the duty cycle D5 of the charge balancer 5 is dependent on the first and second output converter duty cycles D31, D32.

According to yet another example, each of the first and second output converters 31, 32 is implemented as a buck-boost converter. Similar to a power converter arrangement in which the first and second output converters 31, 32 are buck converters or boost converters, the charge balancer duty cycle D5 can be obtained based on first and second output converter duty cycles D31, D32 when the first and second output converters 31, 32 are buck-boost converters.

The information on the first and second output converter duty cycles D31, D32 can be obtained by the balancer controller 6 in various ways. According to one example, the balancer controller is configured to receive the duty cycle information from an output converter controller 7 (see, Figure 1) that is configured to control operation of the first and second output converters 31, 32. According to another example, the balancer controller 6 is configured to monitor operation of the first and second output converters 31, 32 and detect the first and second output converter duty cycles D31, D32 based on such monitoring.

For obtaining information on the second intermediate voltage V22 and the midpoint voltage Vm the power converter may include conventional voltage sensors that are configured to sense the second intermediate voltage V22 and the midpoint voltage Vm and provide corresponding voltage information to the balancer controller 6 for calculating the duty cycle 5 of the charging balancer.

According to one example, the balancer controller 6 and the output converter controller 7 illustrated in Figure 1 are formed by the same controller, such as a microcontroller controlling the overall operation of the power converter.

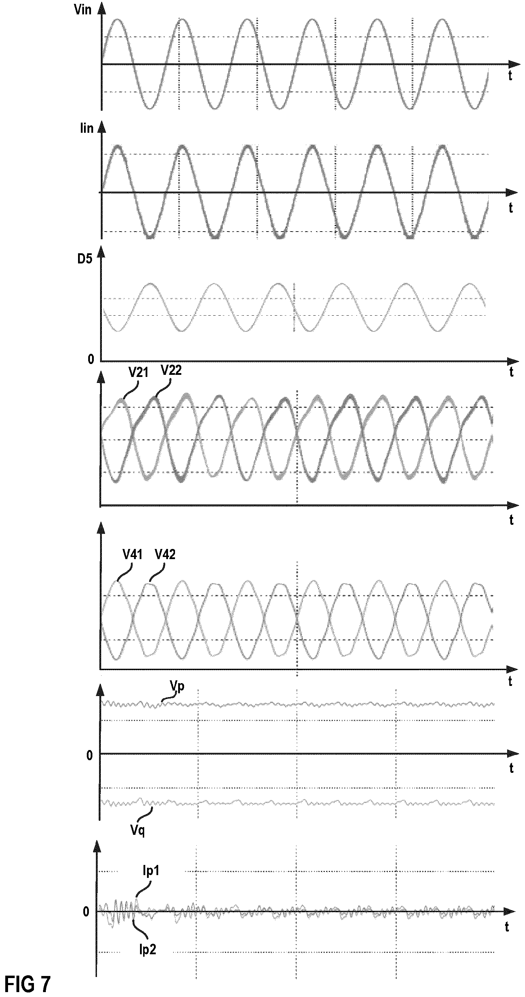

Figure 7 shows signal diagrams that illustrate operation of a power converter of the type illustrated in Figure 1 when the balancing circuit 5 is operated in accordance with the method explained herein above. More specifically, Figure 7 shows signal diagrams of the input voltage Vin, the input current Iin, the duty cycle D5 of the balancing circuit 5, the first and second intermediate voltages V21, V22, the first and second output voltages V41, V42, the voltage Vp between the first output node p and the reference node N, the voltage Vq between the second output node q and the reference node N, and the parasitic currents Ip1, Ip2.

In the example illustrated in Figures 7, the input voltage Vin is a sinusoidal input voltage, wherein several successive periods of the input voltage Vin are illustrated. Furthermore, the signal diagrams of the input current Iin relate to a power converter in which the input converter 1 is a PFC (power factor correction) converter that is configured to regulate the intermediate voltage Vdc to have a predefined voltage level and, at the same time, regulate the signal waveform of the input current Iin to be in accordance with the signal waveform of the input voltage Vin. Thus, in the example illustrated in Figure 7, the input current Iin has a sinusoidal waveform. Dependent on the implementation and the operating mode of the input converter 1, the input current Iin is in phase with the input voltage Vin or there is a phase shift between the input voltage Vin and input current Iin and the input voltage Vin. The method for operating the balancing circuit 5, however, is not restricted to a power converter in which the input converter 1 is a PFC converter.

As can be seen from Figure 7, the voltages Vp, Vq between the first and second output nodes p, q and the reference node N are essentially constant and at least approximately have the same magnitude. Furthermore, one of these voltages Vp, Vq is positive and the other one is negative, so that the common mode voltage as given by equation (2) is approximately zero and the parasitic currents Ip1, Ip2 are approximately zero.

As can be seen from Figure 7, this is the result of the balancing circuit varying the first and second intermediate voltages V21, V22 in accordance with the varying input voltage Vin that defines the midpoint voltage Vm. This is a direct result of adjusting the duty cycle D5 dependent on the first and second output converter duty cycles D31, D32, which each define a respective one of the partial output voltages V41, V42 dependent on a respective one of the first and second intermediate voltages V21, V22. As can be seen from Figure 7, the duty cycle D5 of the balancing circuit 5 also varies in accordance with the input voltage Vin.

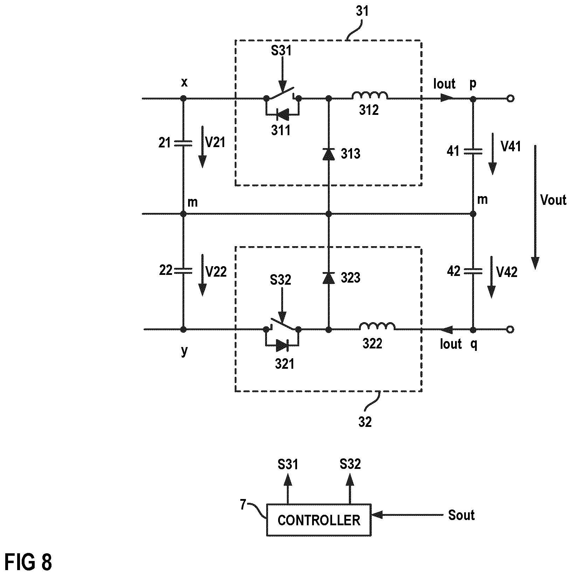

Referring to the above, the first and second output converters 41, 42 may be implemented as buck converters. Figure 8 illustrates one example for implementing each of the first and second output converters 41, 42 as a buck converter.

Referring to Figure 8, in this example, each of the first and second output converters 31, includes an electronic switch 311, 321, an inductor 312, 322, and a rectifier element (freewheeling element) 313, 323. The rectifier elements 313, 323 can be implemented as passive rectifier elements, such as diodes (as illustrated), or as active rectifier elements (synchronous rectifiers)

In the first output converter 31, the electronic switch 311 and the inductor 312 are connected in series between the first intermediate node x and the first output node p, and the rectifier element 313 is connected in parallel with a series circuit including the inductor 312 and the first output capacitor 41. In the second output converter 32, the electronic switch 321 and the inductor 322 are connected in series between the second intermediate node y and the second output node q, and the rectifier element 323 is connected in parallel with a series circuit including the inductor 322 and the second output capacitor 42.

The electronic switch 311, 321 in each of the first and second output converters 31, 32 can be operated in a switched mode, so that each of the switches 311, 321 alternatingly switches on and switches off.

According to one example, the output converters 31, 32 are operated with a fixed switching frequency, so that each of the electronic switches 311, 321 is operated in a plurality of successive drive cycles that have the same duration. According to one example, the first and second output converters 31, 32 are operated with the same switching frequency. According to one example, the switching frequency of the first and second output converters 31, 32 equals the switching frequency of the balancing circuit 5. According to another example, the switching frequency of the first and second output converters 31, 32 is different from the switching frequency of the balancing circuit.

According to one example, the switching frequency of each of the first and second output converters 31, 32 is selected from the same range as the switching frequency explained hereinabove of the balancing circuit 5.

The duty cycle D31 of operation of the first output converter 31 is the duty cycle of operation of the electronic switch 311 in the first output converter 31. The duty cycle of operation of the electronic switch 311 in the first power converter 31 is the ratio between the duration of the on-time of the electronic switch 311 in a respective drive cycle and the duration of the drive cycle.

The duty cycle D32 of operation of the second output converter 32 is the duty cycle of operation of the electronic switch 321 in the second output converter 32. The duty cycle of operation of the electronic switch 321 in the second output converter 32 is the ratio between the duration of the on-time of the electronic switch 321 in a respective drive cycle and the duration of the drive cycle.

In the first output converter 31, when the electronic switch 311 is in the on-state, the output current Iout flows through the electronic switch 311 and the inductor 312. When the electronic switch 311 switches off, the freewheeling element 313 takes over the current Iout from the electronic switch 311. In the second output converter 32, when the electronic switch 321 is in the on-state, the output current Iout flows through the electronic switch 321 and the inductor 322. When the electronic switch 321 switches off, the freewheeling element 323 takes over the current from the electronic switch 321. By suitably adjusting the first and second duty cycles D31, D32 the output current Iout or the output voltage Vout can be regulated.

According to one example illustrated in Figure 8, the electronic switches 311, 321 in the first and second output converters 31, 32 are controlled by control signals S31, S32 provided by the output converter controller 7. According to one example, the output converter controller 7 is configured to generate the control signals S31, S32 dependent on an output signal Sout that represents the instantaneous signal level of the output parameter to be regulated. Thus, according to one example, the output signal Sout represents the instantaneous current level of the output current Iout. According to another example, the output signal Sout represents the instantaneous voltage level of the output voltage Vout. The output converter controller 7 is configured to compare the instantaneous signal level of the output signal Sout with a respective reference value (setpoint value) and adjust the first and second duty cycles D31, D32 for generating the first and second drive signals S31, S32 such that the output parameter at least approximately equals the reference value. This is a basically known for operating buck converters of the type illustrated in Figure 7, so that no further explanation is required in this regard.

Referring to the above, the input converter 1 can be implemented as a PFC converter. The PFC converter may include one converter stage or may include two or more converter stages connected in parallel between the input nodes a, b and the intermediate nodes x, y and is configured to regulate the intermediate voltage Vdc to be equal to a predefined setpoint value. Any type of PFC converter configured to regulate the intermediate voltage Vdc can be used in the power converter according to Figure 1.

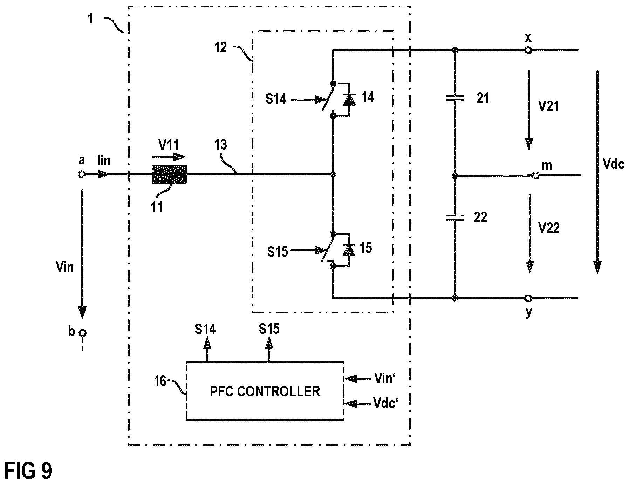

Just for the purpose of illustration, one example of a PFC converter is illustrated in Figure 9. The PFC converter illustrated in Figure 9 has a totem pole topology and includes an inductor 11 connected between the first input node a and a switched node 13 of a switching circuit 12. The switching circuit 12 includes a first electronic switch 14 connected between the switched node 13 and the first intermediate node x, and a second electronic switch 15 connected between the switched node 13 and the second intermediate node y. A PFC controller 16 is configured to control operation of the first and second electronic switches 14, 15. More specifically, the PFC controller 16 is configured to operate the first and second electronic switches 14, 15 in a PWM fashion dependent on an intermediate voltage signal Vdc' that represents an instantaneous signal level of the intermediate voltage Vdc and an input voltage signal Vin' that represents and instantaneous signal level of the input voltage Vin. The PFC controller alternatingly switches on the first and second electronic switches 14, 15 so that only one of the switches 14, 15 is in the on-state at the same time.

More specifically, by operating the first and second electronic switches 14, 15 in the PWM fashion, the PFC controller 16 controls the average electrical potential at the switched node 13 in order to control an average of a voltage V11 across the inductor 11 and in order to control the average of the input current Iin. By controlling the average of the input current Iin both the voltage level of the intermediate voltage Vdc and the waveform of the input current Iin can be regulated. This is basically known, so that no further explanation is required in this regard.

In the example illustrated in Figure 9, the switching circuit 12 is a two-level switching circuit. That is, dependent on the switching state of the switching circuit 12 the electrical potential at the switched node 13 either equals the electrical potential at the first intermediate node x or the electrical potential second intermediate node y. The electrical potential at the switched node 13 equals the electrical potential at the first intermediate node x when the first electronic switch 14 is in the on-state and the second electronic switch 15 is in the off-state. Furthermore, the electrical potential at the switched node 13 equals the electrical potential at the second intermediate node y when the first electronic switch 14 is in the off-state and the second electronic switch 15 is in the on-state.

The PFC converter 1, however, is not restricted to be implemented with a two-level switching circuit. Other types of switching circuits, such as a three-level switching circuit that is configured to generate three different electrical potentials at the switched node 13 in order to control the inductor voltage V11 and the input current Iin may be used as well.

In the example illustrated in Figure 9, the PFC converter 1includes one converter stage. This, however, is only an example. According to another example the PFC converter includes three converter stages of the type illustrated in Figure 9 connected in parallel between the input nodes a, b and the intermediate nodes x, y.

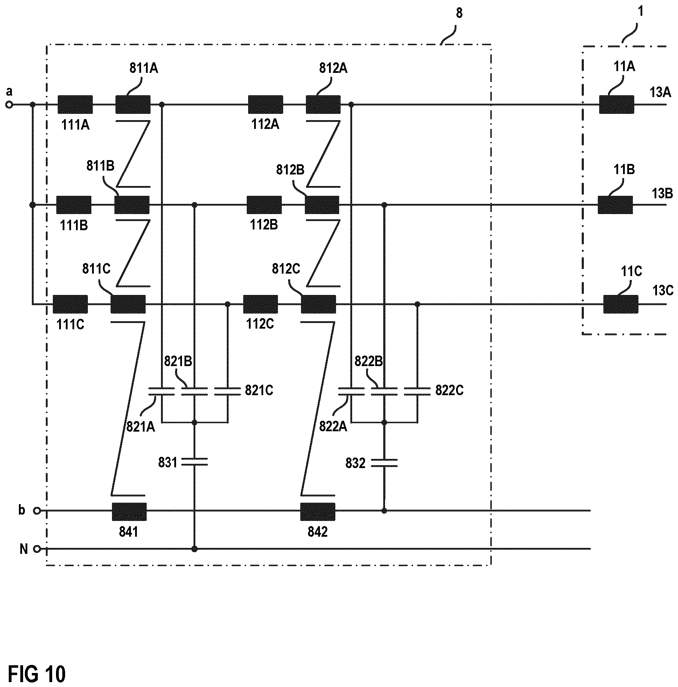

Referring to the above, an input filter 8 that is configured to filter current ripples of the input current Iin resulting from a switched-mode operation of the input converter 1 may be connected between the input nodes a, b and the input converter 1. One example of the input filter 8 is illustrated in Figure 10.

The input filter illustrated in Figure 10 is suitable to be used in a power converter in which the PFC converter 1 includes three converter stages of the type illustrated in Figure 9 that each include a respective inductor 11A, 11B, 11C connected to a respective switched node 13A, 13B, 13C, a first electronic switch connected between the switched node 13A, 13B, 13C and the first intermediate node x, and a second electronic switch connected between the switched node13A, 13B, 13C and the second intermediate node y. In Figure 10, the inductors 11A, 11B, 11C are illustrated. The first and second electronic switches of the converter stage is, however, are not illustrated.

In the example illustrated in Figure 10, the input filter 8 includes three filter stages, wherein each of these filter stages is connected between the first input node a and the inductor 11A, 11B, 11C of a respective one of the three converter stages of the PFC converter 1. Furthermore, each of the filter stages is connected to the second input node b and the ground node N.

Each of the filter stages includes several inductors connected in series between the first input node a and the inductor 11A, 11B, 11C of a respective one of the three converter stages of the PFC converter 1. Furthermore, each of the filter stages includes several capacitors.

More specifically, in the example illustrated in Figure 10, each of the filter stages includes a first inductor 111A, 111B, 111C, a second inductor 112A, 112B, 112C, a third inductor 811A, 811B, 811C, and a fourth inductor 812A, 812B, 812C connected in series between the first input node a and the respective inductor 11A, 11B, 11C of the PFC converter 1. According to one example, the third inductors 811A, 811B, 811C are inductively coupled with each other, and the fourth inductors 812A, 812B, 812C are inductively coupled with each other. The first and second inductors 111A, 111B, 111C, 112A, 112B, 112C are optional and can be considered as additional inductors of the converter stages of the PFC converter 1 in addition to the inductors 11A, 11B, 11C.

Referring to Figure 10, each filter stage further includes a first capacitor 821A, 821B, 821C that couples the respective filter stage to the ground node N through a first further capacitor 831, and a second capacitor 822A, 822B, 822C that couples the respective filters stage to the second input node b through a second further capacitor 832. More specifically, in the example illustrated in Figure 10, each of the first capacitors 821A, 821B, 821C couples a circuit node between the third and fourth inductors 811A, 811B, 811C, 812A, 812B, 812C to the ground node N and each of the second capacitors 822A, 822B, 822C couples a circuit node between the fourth inductors 812A, 812B, 812C and the converter stages of the PFC converter 1 to the second input node b.

Optionally, the input filter 8 further includes a fifth inductor 841 and a sixth inductor 842 connected in series between the second input node b and the midpoint m (not illustrated in Figure 10). According to one example, the fifth inductor 841 is inductively coupled with the third inductors 811A, 811B, 811C and the sixth inductor 842 is inductively coupled with the fourth inductors 812A, 812B, 812C.

It should be noted that the input filter 8 illustrated in Figure 10 is only an example. Any other type of input filter configured to filter out current ripples resulting from a switched mode operation of a converter stage, such as PFC converter 1, may be used in the power converter as well.

Some of the aspects explained above are briefly summarized in the following with reference to numbered examples.

Example 1. A method, including: adjusting a common mode voltage at first and second output nodes of a power converter, wherein the power converter includes: a first input node configured to receive a first input voltage, and a second input node configured to receive a second input voltage; a first intermediate capacitor connected between a first intermediate node and a midpoint, and a second intermediate capacitor connected between the midpoint and a second intermediate node; a first output capacitor connected between the first output node and the midpoint, and a second output capacitor connected between the midpoint and the second output node; an input converter coupled to the first input node and configured to provide an intermediate voltage between the first intermediate node and the second intermediate node; a first output converter coupled between the first intermediate capacitor and the first output capacitor, and a second output converter coupled between the second intermediate capacitor and the second output capacitor; and a balancing circuit coupled to the first intermediate capacitor and the second intermediate capacitor, wherein the second input node is coupled to the midpoint, wherein adjusting the common mode voltage includes: obtaining a duty cycle of operation of at least one of the first and second output converters; and adjusting a duty cycle of operation of the balancing circuit dependent on the obtained duty cycle of the at least one of the first and second output converters.

Example 2. The method of example 1, further including: operating the first output converter and the second output converter at the same duty cycle.

Example 3. The method of example 1 or 2, wherein adjusting the duty cycle of operation of the balancing circuit further includes adjusting the duty cycle dependent on a voltage across one of the intermediate capacitors and dependent on a voltage between the midpoint and a reference node.

Example 4. The method of any one of examples 1 to 3, wherein adjusting the common mode voltage includes adjusting the common mode voltage to be at least approximately zero.

Example 5. The method of any one of examples 1 to 4, wherein the first input voltage and the second input voltage are referenced to the reference node.

Example 6. The method of any one of examples 1 to 5, wherein the first and second input voltages are alternating voltages, wherein the first and second input voltages have at least approximately the same frequency and amplitude, and wherein a phase shift between the first and second input voltages is at least approximately 180°.

Example 7. The method of example 6, wherein the first and second input voltages are sinusoidal voltages.

Example 8. The method of any one of examples 1 to 7, wherein the balancing circuit includes: an inductor including a first circuit node connected to the midpoint and a second circuit node; at least one first switch connected between the second circuit node of the inductor and the first intermediate node; at least one second switch connected between the second circuit node of the inductor and the second intermediate node.

Example 9. The method of example 8, wherein the at least one first switch includes two first switches connected in series between the second circuit node of the inductor and the first intermediate node, wherein the at least one second switch include two second switches connected in series between the second circuit node of the inductor and the second intermediate node, and wherein the balancing circuit further includes a capacitor connected between a circuit node at which the two first switches are connected and a circuit node at which the two second switches are connected.

Example 10. The method of any one of examples 1 to 9, wherein each of the first and second output converters is a buck converter.

Example 11. The method of any one of examples 1 to 10, wherein the input converter is a PFC converter.

Example 12. The method of any one of examples 1 to 11, wherein obtaining the duty cycle of the at least one of the first and second output converters includes receiving the duty cycle from a controller configured to control operation of the first and second output converters.

Example 13. The method of any one of examples 1 to 11, wherein obtaining the duty cycle of the at least one of the first and second output converters includes measuring the duty cycle of operation of the at least one of the first and second output converters.

Example 14. The method of any one of examples 3 to 13, wherein the first and second output converters are buck converters, and wherein adjusting the duty cycle of operation of the balancing circuit includes adjusting the duty cycle in accordance with $D5 = \dfrac{V22}{V22 \cdot \left(1 + \frac{D32}{D31}\right) - 2 \cdot \frac{Vm}{D31}}$ , where D5 denotes the duty cycle of operation of the balancing circuit, where V22 denotes one of the first and second intermediate voltages, where Vm denotes the voltage between the midpoint and the reference node, D31 denotes the duty cycle of the first output converter, and D32 denotes the duty cycle of the second output converter.

Example 15. A power converter, including: a first input node configured to receive a first input voltage and a second input node configured to receive a second input voltage; a first intermediate capacitor connected between a first intermediate node and a midpoint, and a second intermediate capacitor connected between the midpoint and a second intermediate node; a first output capacitor connected between a first output node and the midpoint, and a second output capacitor connected between the midpoint and a second output node; an input converter coupled to the first input node and configured to provide an intermediate voltage between the first intermediate node and the second intermediate node; a first output converter coupled between the first intermediate capacitor and the first output capacitor, and a second output converter coupled between the second intermediate capacitor and the second output capacitor; a balancing circuit coupled to the first intermediate capacitor and the second intermediate capacitor; and a control circuit configured to obtain a duty cycle of operation of at least one of the first and second output converters, adjust a duty cycle of operation of the balancing circuit dependent on the obtained duty cycle of the at least one of the first and second output converters, and operate the balancing circuit in accordance with the adjusted duty cycle.

Example 16. The power converter of example 15, wherein the control circuit is further configured to adjust the duty cycle of operation of the balancing circuit dependent on a voltage across one of the intermediate capacitors, and a voltage between the midpoint and a reference node.

**Claims**

1. A method, comprising:

   adjusting a common mode voltage at first and second output nodes (p, q) of a power converter,
   wherein the power converter comprises:

   a first input node (a) configured to receive a first input voltage (Va), and a second input node (b) configured to receive a second input voltage (Vb);
   a first intermediate capacitor (21) connected between a first intermediate node (x) and a midpoint (m), and a second intermediate capacitor (22) connected between the midpoint (m) and a second intermediate node (y);
   a first output capacitor (41) connected between the first output node (p) and the midpoint (m), and a second output capacitor (42) connected between the midpoint (m) and the second output node (q);
   an input converter (1) coupled to the first input node (a) and configured to provide an intermediate voltage (Vdc) between the first intermediate node (x) and the second intermediate node (y);
   a first output converter (31) coupled between the first intermediate capacitor (21) and the first output capacitor (41), and a second output converter (32) coupled between the second intermediate capacitor (22) and the second output capacitor (42); and
   a balancing circuit (5) coupled to the first intermediate capacitor (21) and the second intermediate capacitor (22),
   wherein the second input node (b) is coupled to the midpoint (m),
   wherein adjusting the common mode voltage comprises:

   obtaining a duty cycle (D31, D32) of operation of at least one of the first and second output converters (31, 32); and
   adjusting a duty cycle of operation of the balancing circuit (5) dependent on the obtained duty cycle (D31, D32; D3) of the at least one of the first and second output converters (31, 32).

2. The method of claim 1, further comprising:
   operating the first output converter (31) and the second output converter (32) at the same duty cycle (D3).

3. The method of claim 1 or 2,
   wherein adjusting the duty cycle of operation of the balancing circuit (5) further comprises adjusting the duty cycle dependent on a voltage (V21, V22) across one of the intermediate capacitors (21, 22) and dependent on a voltage (Vm) between the midpoint (m) and a reference node (N).

4. The method of any one of claims 1 to 3,
   wherein adjusting the common mode voltage comprises adjusting the common mode voltage to be at least approximately zero.

5. The method of any one of the preceding claims,

   wherein the first and second input voltages (Va, Vb) are alternating voltages,
   wherein the first and second input voltages (Va, Vb) have at least approximately the same frequency and amplitude, and
   wherein a phase shift between the first and second input voltages (Va, Vb) is at least approximately 180°.

6. The method of claim 5,
   wherein the first and second input voltages (Va, Vb) are sinusoidal voltages.

7. The method of any one of the preceding claims, wherein the balancing circuit (5) comprises:

   an inductor (53) comprising a first circuit node (531) connected to the midpoint (m) and a second circuit node (532);

at least one first switch (51; 511, 512) connected between the second circuit node (532) of the inductor (53) and the first intermediate node (x);

at least one second switch (52; 521, 522) connected between the second circuit node (532) of the inductor (53) and the second intermediate node (y).

8. The method of claim 7,

wherein the at least one first switch comprises two first switches (511, 512) connected in series between the second circuit node (532) of the inductor (53) and the first intermediate node (x),

wherein the at least one second switch comprise two second switches (521, 522) connected in series between the second circuit node (532) of the inductor (53) and the second intermediate node (y), and

wherein the balancing circuit (5) further comprises a capacitor (54) connected between a circuit node at which the two first switches (511, 512) are connected and a circuit node at which the two second switches (521, 522) are connected.

9. The method of any one of the preceding claims,
wherein each of the first and second output converters (31, 32) is a buck converter.

10. The method of any one of the preceding claims,
wherein the input converter (1) is a PFC converter.

11. The method of any one of claims 1 to 10,
wherein obtaining the duty cycle (D31, D32; D3) of the at least one of the first and second output converters (31, 32) comprises receiving the duty cycle (D31, D32; D3) from a controller (7) configured to control operation of the first and second output converters (31, 32).

12. The method of any one of claims 1 to 10,
wherein obtaining the duty cycle of the at least one of the first and second output converters (31, 32) comprises measuring the duty cycle of operation of the at least one of the first and second output converters (31, 32).

13. The method of any one of claims 3 to 12,

wherein the first and second output converters (31, 32) are buck converters, and

wherein adjusting the duty cycle of operation of the balancing circuit (5) comprises adjusting the duty cycle in accordance with
$$D5 = \frac{V22}{V22 \cdot \left(1 + \frac{D32}{D31}\right) - 2 \cdot \frac{Vm}{D31}} \ ,$$

where D5 denotes the duty cycle of operation of the balancing circuit (5),

where V22 denotes one of the first and second intermediate voltages,

where Vm denotes the voltage between the midpoint (m) and the reference node (N),

D31 denotes the duty cycle of the first output converter (31), and

D32 denotes the duty cycle of the second output converter (32).

14. A power converter, comprising:

a first input node (a) configured to receive a first input voltage (Va) and a second input node (b) configured to receive a second input voltage (Vb);

a first intermediate capacitor (21) connected between a first intermediate node (x) and a midpoint (m), and a second intermediate capacitor (22) connected between the midpoint (m) and a second intermediate node (y);

a first output capacitor (41) connected between a first output node (p) and the midpoint (m), and a second output capacitor (42) connected between the midpoint (m) and a second output node (q);

an input converter (1) coupled to the first input node (a) and configured to provide an intermediate voltage (Vdc) between the first intermediate node (x) and the second intermediate node (y);

a first output converter (31) coupled between the first intermediate capacitor (21) and the first output capacitor (41), and a second output converter (32) coupled between the second intermediate capacitor (22) and the second output capacitor (42);

a balancing circuit (5) coupled to the first intermediate capacitor (21) and the second intermediate capacitor (22);

and
a control circuit (6) configured to
obtain a duty cycle (D31, D32) of operation of at least one of the first and second output converters (31, 32),
adjust a duty cycle (D5) of operation of the balancing circuit (5) dependent on the obtained duty cycle (D31, D32; D3) of the at least one of the first and second output converters (31, 32), and
operate the balancing circuit (5) in accordance with the adjusted duty cycle.

15. The power converter of claim 14,

wherein the control circuit (6) is further configured to adjust the duty cycle (D5) of operation of the balancing circuit (5) dependent on
a voltage (V21, V22) across one of the intermediate capacitors (21, 22), and
a voltage (Vm) between the midpoint (m) and a reference node (N).

FIG 1

FIG 2

ADJUSTING A COMMON MODE VOLTAGE AT FIRST AND
SECOND OUTPUT NODES OF THE POWER CONVERTER ⌐100

OBTAINING A DUTY CYCLE OF OPERATION OF AT LEAST ONE
OF THE FIRST AND SECOND OUTPUT CONVERTERS ⌐101

ADJUSTING A DUTY CYCLE OF OPERATION OF THE CHARGE
BALANCING CIRCUIT DEPENDENT ON THE OBTAINED DUTY
CYCLE OF THE AT LEAST ONE OF THE FIRST AND SECOND
OUTPUT CONVERTERS ⌐102

FIG 3

EP 4 716 079 A1

FIG 4

FIG 5

FIG 6

FIG 7

FIG 8

FIG 9

FIG 10

Europäisches
Patentamt
European
Patent Office
Office européen
des brevets

# EUROPEAN SEARCH REPORT

**Application Number**

EP 24 20 1708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2021 206982 A1 (UNIV PADERBORN KOERPERSCHAFT DES OEFFENTLICHEN RECHTS [DE]) 5 January 2023 (2023-01-05) * paragraph [0003] - paragraph [0061] * * figures 2,3,7 * | 1-15 | INV. H02M1/00 H02M1/12 H02M1/42 H02M3/156 |
| A | STROTHMANN B ET AL: "Common-Mode-Free Bidirectional Three-Phase PFC-Rectifier for Non-Isolated EV Charger", 2021 IEEE APPLIED POWER ELECTRONICS CONFERENCE AND EXPOSITION (APEC), IEEE, 14 June 2021 (2021-06-14), pages 2783-2790, XP033944810, DOI: 10.1109/APEC42165.2021.9487462 [retrieved on 2021-07-14] * figure 8 * | 7 | ADD. H02M7/538 |
| A | EP 4 184 769 A1 (HYPER POLAND ELECTRO S A [PL]) 24 May 2023 (2023-05-24) * figures 1,2a,2b * | 7,8 | |

**TECHNICAL FIELDS SEARCHED (IPC)**

H02M

The present search report has been drawn up for all claims

| Place of search | Date of completion of the search | Examiner |
|---|---|---|
| The Hague | 12 February 2025 | Lochhead, Steven |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 1708

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| DE 102021206982 A1 | 05-01-2023 | DE 102021206982 | A1 | 05-01-2023 |
| | | EP 4363263 | A1 | 08-05-2024 |
| | | US 2024317087 | A1 | 26-09-2024 |
| | | WO 2023274816 | A1 | 05-01-2023 |
| EP 4184769 A1 | 24-05-2023 | EP 4184769 | A1 | 24-05-2023 |
| | | EP 4457924 | A1 | 06-11-2024 |
| | | US 2025023487 | A1 | 16-01-2025 |
| | | WO 2023089160 | A1 | 25-05-2023 |

EPO FORM P0459

For more details about this annex : see Official Journal of the European Patent Office, No. 12/82